# EUROPEAN PATENT APPLICATION

(11) **EP 4 420 876 A1**
(43) Date of publication of application: **28.08.2024**
(21) Application number: 24158771.6
(22) Date of filing: 21.02.2024
(51) Int. Cl.: B32B 27/08, B32B 27/30, B32B 27/32, B65D 35/02, B65D 65/40, B65D 65/42

(54) **HIGH BARRIER PACKAGING LAMINATE WITH IMPROVED MACHINABILITY**

(30) Priority: 24.02.2023 DE 102023104566
(71) Applicant: Huhtamaki Flexible Packaging Germany GmbH & Co. KG, 87671 Ronsberg (DE)
(72) Inventor: Souza, Mayara, 59151250 Parnamirim - RN (BR); Losert, Wolfgang, 87634 Obergünzburg (DE); Detlev, Schulz, 87463 Dietmannsried (DE)
(74) Representative: Ruttensperger Lachnit Trossin Gomoll

(57) **Abstract**

A packaging laminate (12) comprises
- at least one first polymer layer arrangement (16) and
- at least one second polymer layer arrangement (20),
wherein the at least one first polymer layer arrangement (16) comprises
- a polyolefin layer (50) formed by a polyolefin film,
- a metal-based layer (56) deposited on the polyolefin film (50; 150), and
- a barrier material layer (54),
wherein the barrier material layer (54) comprises at least one of
+ a vinyl alcohol polymer layer (54),
+ a metal oxide layer, and
+ a polymer layer filled with nanoparticles,
wherein the at least one second polymer layer arrangement (20) comprises at least one polymer layer (60, 62, 64), wherein at least one polymer layer (60, 62, 64) of the at least one polymer layer (60, 62, 64) of the at least one second polymer layer (20) arrangement is an extruded layer, wherein each of the outermost layers (12a, 12b) on either side of the packaging laminate (12) is formed by a polymer layer (52, 70), such that each exposed surface (12a, 12b) of the packaging laminate (12; 112) is a polymer surface.

The packaging laminate (12) has an overall oxygen transfer rate of 0.5 cm³/(m²·d·bar) or less, wherein at least one of the subsequent conditions of friction applies:
i.) an exposed surface (12a; 112a) has a coefficient of friction with itself of less than 0.90, and
ii.) an exposed surface (12b; 112b) has a coefficient of friction with a metal surface of less than 0.80.

## Description

The present application refers to a packaging laminate comprising
- at least one first polymer layer arrangement and
- at least one second polymer layer arrangement,

wherein the at least one first polymer layer arrangement comprises
   - a polyolefin layer formed by a polyolefin film,
   - a metal-based layer deposited on the polyolefin film, and
   - a barrier material layer,
wherein the barrier material layer comprises at least one of
   + a vinyl alcohol polymer layer,
   + a metal oxide layer, and
   + a polymer layer filled with nanoparticles,
wherein the at least one second polymer layer arrangement comprises at least one polymer layer, wherein at least one polymer layer of the at least one polymer layer of the at least one second polymer layer arrangement is an extruded layer, wherein each of the outermost layers on either side of the packaging laminate is formed by a polymer layer, such that each exposed surface on opposing sides of the packaging laminate is a polymer surface.

The present application particularly refers to a tube laminate as a packaging laminate that is particularly suitable and dedicated to forming tube bodies for squeezable and foldable tube containers.

Tube laminates as packaging laminates with barrier properties against a migration of oxygen and water vapor through the respective laminate are known from WO 2021/037347 A, WO 2018/202479 A, WO 2022/070214 A, and WO 2012/020426 A.

For tube containers it is important to shield the packaged good accommodated in the container space of the tube container from oxygen of the atmosphere, in order to avoid an unwanted oxidation of the product. Thereby the shelf life of the packaged product can be extended compared to the same product packaged with a less effective oxygen barrier.

Additionally, the packaging laminate must exhibit good machinability, to allow for an easy, reliable and error-free production process of a packaging on the basis of the packaging laminate.

In particular during the formation of a tube body out of a blank of the packaging laminate the blank is rolled around a mandrel with a metal surface. The kind of contact and in particular the ability of the blank to slide relative to the mandrel surface is an important factor to the machinability of the packaging laminate. The surface of the packaging laminate contacting the metal surface of the mandrel is the exposed innermost surface of the packaging laminate and of the tube body formed out of it.

Likewise, the outer surface of the tube body comes into contact with itself during the manufacturing process of the tube body out of the packaging laminate. Also in case of this contact the nature of this contact is an important factor to the machinability of the packaging laminate. Usually, the surface of the packaging laminate that comes into contact with itself during a manufacturing process is the exposed outermost surface of the packaging laminate and of the tube body formed out of it.

It is the object of the present invention to improve the packaging laminate set out at the beginning of this specification to protect the packaged product against deterioration while having an improved machinability to facilitate the manufacture of a packaging, in particular of the tube container, out of the improved packaging laminate.

This object is solved by a packaging laminate as described at the beginning of this specification, wherein the packaging laminate has an overall oxygen transfer rate of not more than 0.5 cm³/(m²·d·bar) determined at 23°C and 75 % relative humidity according to DIN 53380-3. Thereby the packaged product can be protected well from unwanted oxidation. The oxygen transfer rate can be adjusted at least by dimensioning the metal-based layer and the barrier layer of the first polymer layer arrangement.

Additionally, at least one of the subsequent conditions of friction applies to the packaging laminate of the present invention:
i.) an exposed surface has a coefficient of friction with itself of less than 0.90 determined according to DIN EN ISO 8295, and
ii.) an exposed surface has a coefficient of friction with a metal surface of less than 0.80 determined according to DIN EN ISO 8295.

Surprisingly, the inventors have found out that the coefficient of friction of an exposed outer polymer surface can be adjusted by selecting the conditions of a chill arrangement of a production line processing the individual components of the packaging laminate to produce the packaging laminate.

The coefficient of friction mentioned in this application refers to a coefficient of static friction and/or to a coefficient of dynamic friction. Coefficients of static friction and coefficients of dynamic friction of polymers do not differ largely, irrespective of whether a polymer is paired with itself or with a metal.

The chill arrangement comprises a, preferably water-cooled, chill roll with a diameter in the range of 700 mm to 1000 mm and with a surface roughness of 0,4 to 0,8 µm Rz determined pursuant to DIN EN ISO 13565-2. The chill arrangement further comprises a pressure roll cooperating with the chill roll in forming a nip therebetween, with the pressure roll having a diameter in the range of 200 mm to 350 mm and a Shore-A hardness in the range of 60 to 90, determined pursuant to DIN ISO 7619-1.

The pressure executed by the chill roll and the pressure roll on the web running through the nip between pressure and chill roll ranges between 1·10⁵ to 5·10⁵ Pa.

Further surprisingly, the inventors have noticed that the coefficient of friction on either exposed polymer surface can be adjusted by the conditions of the chill arrangement as set forth above, irrespective of whether the exposed polymer surface is in immediate and direct contact with the chill roll surface and/or whether the exposed polymer surface is in immediate and direct contact with the pressure roll.

However, it is necessary that the packaging laminate comprises at least one extruded polymer layer not only as a reason to use at all the chill arrangement with the chill roll and the pressure roll, but also to introduce thermal energy into the entire laminate through the extruded layer. This thermal energy introduced by the at least one extruded polymer layer allows for a slight softening of the outermost polymer layers exhibiting the exposed surfaces. However, it is not necessary for the extruded polymer layer to directly contact one roll out of the chill roll and the pressure roll. The at least one extruded polymer layer can be an intermediate layer of the resulting packaging laminate.

The values for coefficients of friction given above under i.) and ii.) are maximum values for the coefficient of friction. Lower values are possible by adjusting the chill arrangement in the production line. With a small effort of trial of varying the parameters of the chill arrangement within the above-listed parameter ranges in a refinement of the present invention the chill arrangement can be set up to achieve a value of the coefficient of friction of an exposed surface with itself of 0.60 or less. Even more preferably the coefficient of the coefficient of friction of the exposed surface with itself can be 0.35 or less.

By the same token the value of the coefficient of friction of an exposed surface with metal, according to a refinement of the present invention, can be arranged to be 0.50 or less. More preferably, this coefficient of friction of the exposed surface with metal can be 0.25 or less.

Although it might be sufficient to have only one exposed polymer surface to exhibit the above-mentioned values of coefficient of friction, in a particularly preferred embodiment of the present invention both opposite exposed polymer surfaces have a particularly low coefficient of friction, so that one of the exposed surfaces has a coefficient of friction with itself of less than 0.90, preferably less than 0.60, more preferably less than 0.35, determined according to DIN EN ISO 8295 and the respective other exposed surface has a coefficient of friction with a metal surface of less than 0.80, preferably less than 0.50, more preferably less than 0.25, determined according to DIN EN ISO 8295.

Not only the coefficients of friction can have lower values than initially mentioned. Also the oxygen transfer rate of the packaging laminate can be adjusted to lower values by correspondingly designing the barrier material layer of the first polymer layer arrangement which is present in addition to the metal-based deposited layer. Consequently, the oxygen transfer rate can exhibit even a value of less than 0.1 cm³/(m²·d·bar) determined under the conditions defined above, i. e. at 23°C and 75 % relative humidity according to DIN 53380-3.

Not only may the packaging laminate shield the packaged product from oxygen, but also from humidity, i. e. water vapor. To that effect, the packaging laminate preferably has an overall water vapor transfer rate of not more than 0.5 g/(m²·d), more preferably not more than 0.1 g/(m²·d), determined at 23°C and 85 % relative humidity according to DIN EN ISO 15106-3.

The water vapor transmission rate may be adjusted by selecting suitable polyolefins for the polyolefin film, like for example HDPE, which provides a good water vapor barrier compared to a reference polyolefin film of the same thickness made out of a different polyethylene variety or polypropylene. Additionally, arranging vapor deposited metal oxide barrier material layers, like for example an aluminum oxide layer and/or an silicon oxide layer, in the first polymer layer arrangement further lowers not only the oxygen transfer rate (OTR) of the packaging laminate, but also its water vapor transfer rate (WVTR).

The polyolefin film of the first polymer layer arrangement can be a polyolefin monolayer film or a polyolefin multilayer film. In case of a polyolefin multilayer film each layer of the film is composed by a polyolefin layer. The polyolefin of the polyolefin film, of the individual layers in case of a multilayer film, is preferably selected from at least one of LLDPE, LDPE, MDPE, HDPE or at least one blend of the listed polyethylene varieties.

The polyolefin film of the first polymer layer arrangement can be a blown film or a cast film.

The polyolefin film of the first polymer layer arrangement can be oriented, for example by stretching, in one direction as machine-direction oriented (MDO) film or into directions as a biaxially oriented film. Orienting the polyolefin film further enhances its water vapor barrier properties and lowers the WVTR of the polyolefin film.

The metal-based layer of the first polymer layer arrangement can be a deposited metal layer, such as a gold layer, silver layer, copper layer or aluminum layer, or can be a metal oxide layer, like preferably an AlₓO_{y} layer, which is the basic denomination of an aluminum oxide layer, or a SiOₓ layer, which is the basic denomination of a silicon oxide layer.

The second polymer layer arrangement can be a polymer monolayer or a polymer multilayer arrangement. The at least one polymer of the second polymer layer arrangement can be selected from at least one of LLDPE, LDPE, MDPE, HDPE, polyvinyl alcohol, ethylene vinyl alcohol copolymer, ethylene and acrylic acid, ethylene methyl acrylate, cyclic olefin copolymer, polypropylene, a maleic anhydride grafted polymer, a plastomer/elastomer, a ionomer, a peelable resin based on ethylene methyl acrylate, a biodegradable polymer, a compostable polymer, a blend of the listed polymers.

Depending on the selected polymer or polymers of the second polymer layer arrangement the second polymer layer arrangement can be used either to enhance the mechanical stability of the packaging laminate or to enhance its barrier properties. By selecting polyethylene, mechanical stability and barrier properties may be increased, since polyethylene may provide additional stability and provides considerable water vapor barrier properties.

Preferably, the second polymer layer arrangement is an extruded polymer layer arrangement. Depending on the formation of the second polymer layer arrangement as a monolayer or multilayer arrangement it can then be an extruded monolayer or coextruded multilayer arrangement. As will be described in more details below, the second polymer layer arrangement can be used to extrusion laminate polymer layer arrangements containing prefabricated films to one another.

The first polymer layer arrangement preferably has an overall thickness in the range of 15 µm to 80 µm.

The second polymer layer arrangement preferably has an overall thickness in the range of 15 µm to 90 µm.

The packaging laminate, in particular as a preferred tube laminate, preferably has an overall thickness in the range of 130 µm to 400 µm.

The overall thickness is to be measured from the exposed surface of the laminate on one side to the exposed surface of the laminate on the opposite side. The term "exposed surface" indicates that the surfaces are exposed at the end of the manufacturing process. This does not exclude that one of the surfaces, in particular the outermost surface, will be covered by printing and, if printed, preferably also by an overlaquer in subsequent processing steps.

In order to widen the range of properties of the packaging laminate, the packaging laminate in a further refinement of the present invention can comprise at least one third polymer layer arrangement, wherein the at least one third polymer layer arrangement comprises a polymer film, wherein the polymer of the polymer film of the third polymer layer arrangement comprises at least one polymer of polyethylene, polyethylene terephthalate, polypropylene, polyvinyl alcohol, ethylene vinyl alcohol copolymer, ethylene and acrylic acid, ethylene methyl acrylate, cyclic olefin copolymer, a maleic anhydride grafted polymer, a plastomer/elastomer, a ionomer, a peelable resin based on ethylene methyl acrylate, a biodegradable polymer, a compostable polymer, a blend of the listed polymers.

The third polymer layer arrangement is similar to the first polymer layer arrangement in that it comprises a prefabricated film, which in contrast to the first polymer layer arrangement is not necessarily made of polyolefin. The prefabricated polymer film of the third polymer layer arrangement can be a monolayer or multilayer film.

However, in order to facilitate recycling of the packaging laminate or a packaging formed using the packaging laminate, preferably the prefabricated films at least are made of the same class of polymer, i. e. polyolefin due to the polyolefin film used for the first polymer layer arrangement, or more preferably of polymer based on the same monomer. According to the preferences set forth above, in a particularly preferred embodiment, the prefabricated polymer films of the packaging laminate are therefore polyethylene films. This applies also to the case that more than two polymer films are present in the packaging laminate. This should not exclude polypropylene from being used as material for the prefabricated polymer films.

Contrary to the first polymer layer arrangement, the third polymer layer arrangement does not contain a metallization layer, i. e. a vapor deposited metal layer.

Preferably, at least 90 weight-% of the polymer used to form the packaging laminate is based on the same monomer, particularly preferred ethylene, to facilitate recycling of the packaging laminate and a container formed using the packaging laminate.

In order to further improve the barrier properties, in particular the oxygen barrier properties, of the packaging laminate, at least one third polymer layer arrangement of the at least one third polymer layer arrangement, can additionally comprise a barrier material layer. The barrier material layer preferably comprises at least one of a vinyl alcohol polymer layer, a metal oxide layer, and a polymer layer filled with nanoparticles. The nanoparticles mentioned in this application can for example be made out of polymer and/or ceramic and/or inorganic material. The nanoparticles within a polymer mentioned in this application can have a mixture of shapes or can have a prevailing shape or can have a specific shape, like e. g. globular, flake-shaped, platelet-shaped, cubic, bar-shaped, and so on.

The at least one third polymer layer arrangement preferably has an overall thickness in the range of 40 µm to 200 µm.

The packaging laminate preferably has only one vapor deposited metal layer, but may have no, one, or more than one metal oxide layer as an additional barrier material layer.

The packaging laminate, to render it particularly mechanically stable and particularly impermeable to oxygen, and preferably also impermeable to water vapor, may comprise two first polymer layer arrangements which are bonded to each other by the second polymer layer arrangement. The second polymer layer arrangement then is preferably an extruded layer arrangement, extrusion laminating the two first polymer layer arrangements together.

The two, or possibly even more, first polymer layer arrangements may structurally differ from each other as long as each first polymer layer arrangement corresponds to the definition of a first polymer layer arrangement given above. For example, the different first polymer layer arrangements may have different barrier material layers and/or may have different metal-based deposited layers and/or may have polyolefin films made out of different polyolefins and/or may have polyolefin films made of different varieties of the same polyolefin type and/or may have polyolefin films made up by a different amount of layers. These possible differences apply to the selected materials as well as to the respective dimensions, in particular thickness dimensions.

The packaging laminate, to achieve the same effect of enhancing mechanical stability and barrier properties, additionally or alternatively, may comprise a first polymer layer arrangement and a third polymer layer arrangement, which are bonded to each other by the second polymer layer arrangement. Again the second polymer layer arrangement then is preferably an extruded layer arrangement, extrusion laminating the first polymer layer arrangement and the third polymer layer arrangement together.

The packaging laminate may also comprise three polymer layer arrangements, one of which is a first polymer layer arrangement, and the two remaining of which are selected out of the first polymer layer arrangement and the third polymer layer arrangement. In this case it suffices if two of the three polymer layer arrangements formed by the first polymer layer arrangement and a further first or a third polymer layer arrangement are extrusion laminated by a second polymer layer arrangement. The remaining two of the three polymer layer arrangements can then be adhesion laminated by using a solvent-based adhesive that is not thermally curing like an extrusion laminating polymer layer arrangement.

The two, or possibly even more, second polymer layer arrangements may structurally differ from each other as long as each second polymer layer arrangement corresponds to the definition of a second polymer layer arrangement given above. Two or more second polymer layer arrangements may, for example, differ from one another by at least one polymer selected for the individual second polymer layer arrangements and/or by the number of polymer layers within the individual second polymer layer arrangements. The possible differences apply to the selected materials as well as to the respective dimensions, in particular thickness dimensions.

If the first and a third polymer layer arrangements are present in the packaging laminate, then in order to protect the sensitive metal-based deposited layer of the first polymer layer arrangement from influences coming from the outside environment of a packaging formed using the packaging laminate described above, the third polymer layer arrangement is preferably located closer to the outside or exposed outermost surface of the packaging laminate than the first polymer layer arrangement, and the first polymer layer arrangement is located closer to the inside or exposed innermost surface of the packaging laminate than the third polymer layer arrangement.

Polymer layers arranged between the opposed exposed surfaces of the packaging laminate and the metal-based layer of the first polymer layer arrangement are preferably at least partially or entirely transparent, in order to make the shiny surface of the metal-based layer visible to the outside, if the metal-based layer is a metal layer.

In order to provide a particularly stable and oxygen and/or water vapor tight packaging laminate the packaging laminate can, as already indicated above, comprise two third polymer layer arrangements, which are bonded to each other by a second polymer layer arrangement or by an adhesive. Since a first polymer layer arrangement is mandatory for the presently described packaging laminate, the first polymer layer arrangement in the presence of two third polymer layer arrangements is preferably arranged between the two third polymer layer arrangement or is arranged as an inner neighbor, being closest to the innermost polymer surface, of the two third polymer layer arrangements, which are then both arranged closer to the outside of the packaging laminate than the first polymer layer arrangement.

The two, or possibly even more, third polymer layer arrangements may structurally differ from each other as long as each third polymer layer arrangement corresponds to the definition of a third polymer layer arrangement given above. For example, the different first polymer layer arrangements may have different barrier material layers and/or may have polyolefin films made out of different polyolefins and/or may have polyolefin films made of different varieties of the same polyolefin type and/or may have polyolefin films made up by a different amount of layers. These possible differences apply to the selected materials as well as to the respective dimensions, in particular thickness dimensions.

The present application further refers to a tube body for a tube container as a preferred packaging. The tube body comprises the packaging laminate as described and refined above. The tube body extends along a tube axis and has a longitudinal seam extending along the tube axis. Opposite ends of a blank containing the packaging laminate are connected to form a tubular body. To this end the blank is usually rolled around the longitudinal tube axis so that originally opposite end portions of the blank are bent to meet to form the longitudinal seam. The tube body has a cross seam at one of its longitudinal end portions, which closes the tubular body at the longitudinal end, wherein the cross seam extends in a crosswise direction relative to the tube axis. Preferably, the cross seam extends orthogonal to the tube axis.

Finally, the present application refers to a tube container comprising the tube body as described above and a tube head bonded to an open longitudinal end of the tube body. The open longitudinal end is located opposite to the closed longitudinal end which has the cross seam. The tube head has an opening by which a surrounding environment of the tube container is accessible from the container space of the tube container. Through the opening of the tube head content packaged in the tube container can be released to the outside by squeezing the tube body.

The tube head usually has a cover or a lid to close the opening of the tube head in times when the tube container is not used.

The present invention subsequently will be described in more detail in accordance with the embodiments shown in the figures. The figures show:
- Fig. 1: a rough schematic view of an extrusion lamination process to bond a first polymer layer arrangement to a third polymer layer arrangement by an extruded second polymer layer arrangement to form a first embodiment of a packaging laminate according to the present invention, having low coefficients of friction on both opposing exposed surfaces of the packaging laminate,
- Fig. 2: a rough schematic sectional view of the first embodiment of a packaging laminate of fig. 1,
- Fig. 3,: a rough schematic sectional view of a second embodiment of a packaging laminate according to the present invention, and
- Fig. 4: a tube container having a tube body formed of a packaging laminate of the present invention.

The figures are not according to scale.

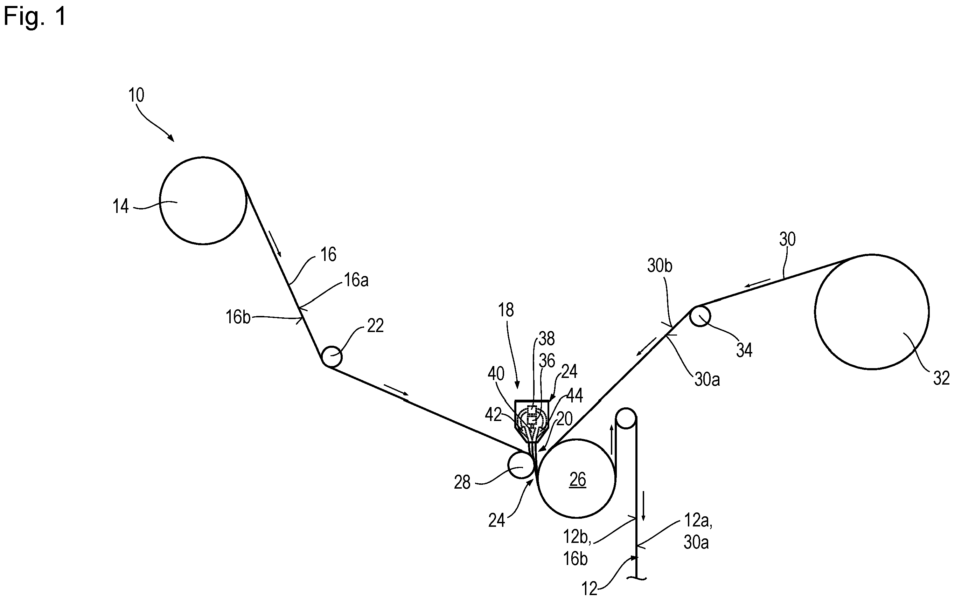

Fig. 1 shows a simplified section of a manufacturing line 10 to manufacture a multi-layer packaging laminate 12 of the present invention with advantageously low coefficients of friction on the opposing exposed surfaces 12a and 12b of the packaging laminate 12. In the exemplified embodiment exposed surface 12a is the outermost surface of the packaging laminate 12, forming an outer surface of a packing formed out of the packaging laminate 12, and exposed surface 12b is the innermost surface of the packaging laminate 12, forming an inner surface of a packing formed out of the packaging laminate 12.

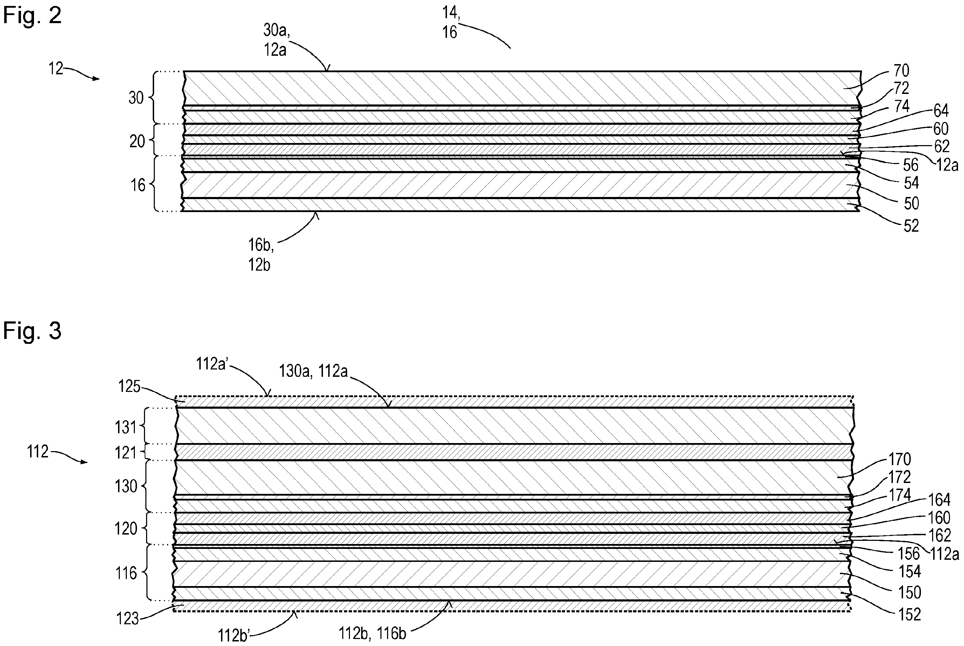

The manufacturing process starts on the left side of figure 1 with a stock roll 14 of a prefabricated first polymer layer arrangement 16. The first polymer layer arrangement 16, which comes wound on the stock roll 14, is unwound. The first polymer layer arrangement 16 is a multilayer arrangement as will be described in the context of fig. 2. It is fed to an extruder station 18. The feed direction of the first polymer layer arrangement 16 is indicated by little arrows parallel to the surfaces of the first polymer layer arrangement 16.

The first polymer layer arrangement 16 has a first exposed surface 16a which in the packaging laminate 12 becomes contacted by a second polymer layer arrangement 20 and after establishing the contact is no longer exposed. The first polymer layer arrangement 16 has a second exposed surface 16b which in the packaging laminate 12 remains an exposed surface and becomes the exposed inner packaging laminate surface 12b.

All roll axes of rolls in the manufacturing line 10 as well as the extension of all polymer layer arrangements 12, 16, 20, and 30 in transverse or cross direction are oriented orthogonal to the drawing plane of fig. 1.

The first polymer layer arrangement 16 is led around a first support roll 22, and reaches the extruder station 18. At the extruder station 18 the first polymer layer arrangement 16 enters a nip 24 between a water-cooled chill roll 26 and a pressure roll 28.

Into the nip 24 a third polymer layer arrangement 30 is fed from a further stock roll 32 via a support roll 34. The third polymer layer arrangement 30 is also a multilayer arrangement that will be explained in detail in the context of fig. 2.

The third polymer layer arrangement 30, the feeding movement of which is also indicated by little arrows parallel to the surface of the third polymer layer arrangement 30, has a first exposed surface 30a which in the packaging laminate 12 remains an exposed surface and becomes the exposed outer packaging laminate surface 30a. The first polymer layer arrangement 16 has a second exposed surface 30b which in the packaging laminate 12 becomes contacted by the second polymer layer arrangement 20 and after establishing this contact is no longer exposed.

The extruder station 18 extrudes the, as an example only, three-ply second polymer layer arrangement 20 onto the surface 16a facing towards the extruder station 18.

The extruder station 18 in the depicted example has two extruder devices 36 and 38 and three extruder nozzles 40, 42 and 44. The extruder device 36 feeds flowable polymer material to extruder nozzle 40, while the extruder device 38 feeds another, different flowable polymer material to the extruder nozzles 42 and 44. In the present example, extruder nozzle 32 emits flowable ethylene vinyl alcohol copolymer (EVOH), while the extruder nozzles 34 and 36 each emit a tie layer material, for example a maleic anhydride grafted polyethylene.

After leaving the chill roll 26 the then-created packaging laminate 12 is transported further downstream in the manufacturing line 10, with the feeding direction indicated by little arrows, and is collected by winding the packaging laminate 12 up on an undepicted stock roll, as it is generally known in the art.

As it is shown by the second embodiment of a packaging laminate according to the present invention according to figure 3, the packaging laminate 12 after leaving the chill roll 26 may be transported to a further extrusion station where another third polymer layer arrangement can be extrusion laminated by another second polymer layer arrangement to create the second embodiment of packaging laminate 112.

The chill arrangement comprising the chill roll 26 and the pressure roll 28 is set up in a particular manner that allows the exposed outer surface 12a of the packaging laminate 12 to end up with a coefficient of friction with itself of 0.33, determined pursuant to DIN EN ISO 8295, and allows the exposed inner surface 12b of the packaging laminate 12 to end up with a coefficient of friction with a metal surface of 0.23, determined pursuant to DIN EN ISO 8295.

Within the chill arrangement, the chill roll 26 has a diameter in the range of 700 mm to 1000 mm, in the given example of 850 mm, and has a surface roughness of 0.4 to 0.8 µm Rz determined pursuant to DIN EN ISO 13565-2, in the given example of 0.5 µm Rz. The pressure roll 28 cooperating with the chill roll 26 in forming the nip therebetween, has a diameter in the range of 200 mm to 350 mm, in the given example of 240 mm, and a Shore-A hardness in the range of 60 to 90, determined pursuant to DIN ISO 7619-1, in the given example of 77.

The pressure executed by the chill roll 26 and the pressure roll 28 on the material running through the nip 24 between pressure roll 28 and chill roll 26 ranges between 1·10⁵ to 5·10⁵ Pa, and in the given example has value of 3.6·10⁵ Pa.

These values of the chill arrangement in the present example provides for the above-mentioned very low coefficients of friction, while at the same time the layer structure provides for a low oxygen transfer rate (OTR) of 0.12 cm³/(m²·d·bar) determined under the conditions defined above, i. e. at 23°C and 75 % relative humidity according to DIN 53380-3, and further provides for a low water vapor transfer rate (WVTR) of 0.16 g/(m²·d) determined at 23°C and 85 % relative humidity according to DIN EN ISO 15106-3.

The layer structure of the first embodiment of the packaging laminate 12 is illustrated in detail in figure 2.

As is clearly shown in figure 2, the first polymer layer arrangement 16 has as a base layer a polyethylene film 50 which is formed out of a blend of HDPE and LDPE.

Bonded to the one side of the polyethylene film 50 is a sealable LLDPE layer 52 which, as a sealable layer, forms the exposed inner surface 12b of the packaging laminate 12 and the exposed surface 16b of the first polymer layer arrangement 16.

The opposite side of the polyethylene film 50 is coated with a barrier material layer 54 of polyvinyl alcohol (PVOH) to provide a first oxygen barrier material layer. The barrier material layer 54 carries a vapor deposited metallization layer 56 using an aluminum alloy as the deposited metal. The metallization layer 56 not only presents a shiny outer surface, which used to be the exposed surface 16a of the first polymer layer arrangement 16, but also presents a barrier against the migration of oxygen and water vapor through the packaging laminate 12.

The three-ply extruded second polymer layer arrangement 20 comprises a central EVOH layer 60 with maleic anhydride grafted polyethylene layer 62 and 64, respectively, on either side as tie layers to bond the second polymer layer arrangement 22 to the first polymer layer arrangement 16 and to the third polymer layer arrangement 30 and thereby to extrusion laminate the first and the third polymer layer arrangements 16 and 30, respectively, together.

The third polymer layer arrangement 30 has, as a base layer, a polyolefin layer 70 made of HDPE and being mono axially directed. The HDPE layer 70 exhibits an exposed surface 30a which is also the exposed outer surface 12a of the packaging laminate 12. Onto the opposite surface of the HDPE layer 70 a metal oxide layer 72, in particular aluminum oxide layer, is deposited, which in turn is coated with a further barrier material layer 74 made of EVOH. Where necessary, primer layers can be interposed to enhance the bonding strength between neighboring layers.

Figure 3 shows a second embodiment of a packaging laminate according to the present invention. Structurally and/or functionally equal components and component sections as in the first embodiment of the packaging laminate 12 are labeled by the same reference numerals in the second embodiment, but increased by the number 100.

Subsequently, the second embodiment will only be described to the extent to which it differs from the first embodiment, to the specification of which reference is made to describe also the second embodiment.

The layers 116, 120, and 130 fully correspond to the above-described layers 16, 20, and 30 of the first embodiment of the packaging laminate 12. Therefore, the packaging laminate 12 can be further processed, for example by feeding the packaging laminate 12 to a further extruder station to extrusion laminate a further third polymer laminate arrangement 131 in the form of a prefabricated polymer film to the packaging laminate 12 by a further second polymer laminate arrangement 121.

The further second polymer layer arrangement 121 is extruded onto the previously exposed surface 12a of the first embodiment of packaging laminate 12, and the further third polymer layer arrangement 131 is thereby bonded, i. e. extrusionlaminated, to the already existing packaging laminate 12 which in the case of the second embodiment acts as an intermediate product for the finished packaging laminate 112.

In the second embodiment the further second polymer layer arrangement 121 and the further third polymer layer arrangement 131 are each monolayer arrangements. Since the layer arrangements 116, 120 and 130 all carry at least one barrier material layer, for economic reasons no further barrier material layers are added by the further second and third polymer layer arrangements 121 and 131, respectively.

The further second polymer layer arrangement 121 for example can be a monolayer made of a blend of LDPE and MDPE, and this further third polymer layer arrangement 131 can be a monolayer polyethylene film made of HDPE or a blend of MDPE and HDPE.

As is indicated by dashed lines, the second embodiment of a packaging laminate 112 can be further extended by another extruded second polymer layer arrangement 123, and/or a still another extruded second polymer layer arrangement 125. For the reason of simplicity both extruded second polymer layer arrangements 123 and 125 are depicted in figure 3 as monolayer extruded layers, in particular as polyethylene layers. Preferably both layers 123 and 125 are sealable polyethylene layers. It may however not be excluded that at least one of the another extruded second polymer layer arrangements 123 and 125 is formed as a coextruded multilayer arrangement.

If one of the another extruded second polymer layer arrangements 123 and/or 125 is arranged as depicted in figure 3, the respective another extruded second polymer layer arrangement 123 and/or 125 forms an exposed surface 112a' and/or 112b'.

Since the entire structural polymer layers 50, 52, and 70 of the packaging laminate 12 as well as the structural polymer layers 150, 152, 170, and 131 of the packaging laminate 112 are made of polyethylene, the entire packaging laminate is preferably formed by more than 90 weight-% of ethylene based polymers, including the maleic anhydride grafted polyethylene layers 62, 64, and 160, 164, respectively, and also including the extruded further second polymer layer arrangement 121. The packaging laminate according to the shown embodiments is therefore particularly easy to recycle and can be recycled in the polyethylene recycling stream.

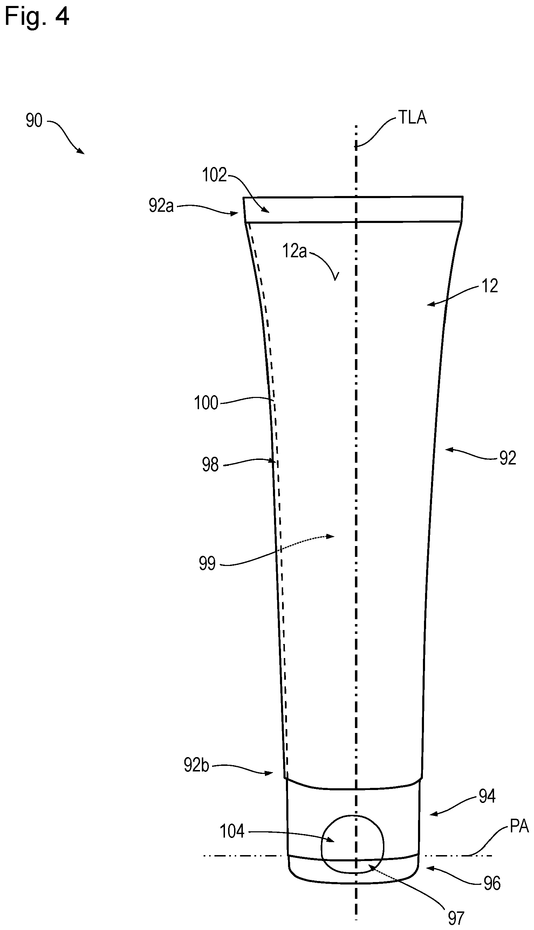

Figure 4 shows a schematic front view of a tube packaging container 90, having a tube body 92 made of the multi-layer packaging laminate 12 and a tube head 94 formed integrally with a pivotable lid 96 on which the tube packaging container 90 can stand. Alternatively the tube body 92 can as well be made of the second embodiment of the multi-layer packaging laminate 112.

In order to form the tube body 92, a blank piece of the multi-layer packaging laminate 12 is rolled around a mandrel such that the circumferential end portions of the rolled blank piece overlap. In the so created overlapping region 98 the exposed innermost polymer surface 12b overlaps the exposed outermost polymer surface 12a axially along a tube body longitudinal axis TLA and circumferentially around the tube body longitudinal axis TLA. Both exposed polymer surfaces 12a and 12b, as well as the polyethylene layers 52 and 70 forming them, are connected by heat sealing in the overlapping region 98 to create longitudinal connecting seam 100 in a lap seal configuration.

At the closed longitudinal end 92a distant from the tube head 94 the tube body 92 is closed by a cross seam 102 in a fin seal configuration. Other than in the longitudinal seam 100, where the exposed inner surface 12b is sealed with the exposed outer surface 12a, in the cross seam 102 opposing areas of the inner surface 12b are sealed with one another.

The tube body 92 at the open longitudinal end 92b close to the tube head 94 surrounds a part of the tube head 94 and overlaps this part in the axial direction and completely in the circumferential direction. The overlapping parts of the tube body 92 and the tube head 94 are also connected by heat sealing. To that end, the tube head 94 is formed of injection molded polyethylene, so that the materials of the tube head 94 and polyethylene layer 52 of the multi-layer packaging laminate 12 are compatible. In a packaging space 99 enveloped by the tube packaging container 90 a paste-like product can for example be accommodated and can be released through a tube head opening 97.

The lid 96 is pivotable about a pivot axis PA, for example through a film joint connecting the lid 96 integrally with the tube head 94 to cover the tube head opening 97. An indentation 104 facilitates lifting the lid 96 from the tube head 94 to open the tube packaging container 90.

## Claims

1. A packaging laminate (12; 112) comprising
- at least one first polymer layer arrangement (16; 116) and
- at least one second polymer layer arrangement (20; 120),
wherein the at least one first polymer layer arrangement (16; 116) comprises
- a polyolefin layer (50; 150) formed by a polyolefin film,
- a metal-based layer (56; 156) deposited on the polyolefin film (50; 150), and
- a barrier material layer (54; 154),
wherein the barrier material layer (54; 154) comprises at least one of
+ a vinyl alcohol polymer layer (54; 154),
+ a metal oxide layer, and
+ a polymer layer filled with nanoparticles,
wherein the at least one second polymer layer arrangement (20; 120) comprises at least one polymer layer (60, 62, 64; 160, 162, 164), wherein at least one polymer layer (60, 62, 64; 160, 162, 164) of the at least one polymer layer (60, 62, 64; 160, 162, 164) of the at least one second polymer layer arrangement (20; 120) is an extruded layer, wherein each of the outermost layers (12a, 12b; 112a, 112b) on either side of the packaging laminate (12; 112) is formed by a polymer layer (52, 70; 152, 131), such that each exposed surface (12a, 12b; 112a, 112b) on opposing sides of the packaging laminate (12; 112) is a polymer surface,
**characterized in that** the packaging laminate (12; 112) has an overall oxygen transfer rate of not more than 0.5 cm³/(m²·d·bar) determined at 23°C and 75 % relative humidity according to DIN 53380-3, wherein at least one of the subsequent conditions of friction applies:
i.) an exposed surface (12a; 112a) has a coefficient of friction with itself of less than 0.90 determined according to DIN EN ISO 8295, and
ii.) an exposed surface (12b; 112b) has a coefficient of friction with a metal surface of less than 0.80 determined according to DIN EN ISO 8295.

2. The packaging laminate (12; 112) according to claim 1,
**characterized in that** one of the exposed surfaces (12a; 112a) has a coefficient of friction with itself of less than 0.90 determined according to DIN EN ISO 8295 and the respective other exposed surface (12b; 112b) has a coefficient of friction with a metal surface of less than 0.80 determined according to DIN EN ISO 8295.

3. The packaging laminate (12; 112) according to claim 1 or 2,
**characterized in that** the packaging laminate (12; 112) has an overall water vapor transfer rate of not more than 0.5 g/(m²·d) determined at 23°C and 85 % relative humidity according to DIN EN ISO 15106-3.

4. The packaging laminate (12; 112) according to one of the preceding claims, **characterized in that** the polyolefin film (50; 150) of the first polymer layer arrangement (16; 116) is polyolefin monolayer film or polyolefin multilayer film with the polyolefin of the polyolefin film being selected from at least one of LLDPE, LDPE, MDPE, HDPE or at least one blend of the listed polyethylene varieties.

5. The packaging laminate (12; 112) according to one of the preceding claims, **characterized in that** the metal-based layer (56; 156) of the first polymer layer arrangement (16; 116) is a metal layer or a metal oxide layer.

6. The packaging laminate (12; 112) according to one of the preceding claims, **characterized in that** the second polymer layer arrangement (20; 120, 121, 123, 125) is a polymer monolayer or a polymer multilayer arrangement with the at least one polymer of the second polymer layer arrangement (20; 120, 121, 123, 125) being selected from at least one of LLDPE, LDPE, MDPE, HDPE, polyvinyl alcohol, ethylene vinyl alcohol copolymer, ethylene and acrylic acid, ethylene methyl acrylate, cyclic olefin copolymer, polypropylene, a maleic anhydride grafted polymer, a plastomer/elastomer, a ionomer, a peelable resin based on ethylene methyl acrylate, a biodegradable polymer, a compostable polymer, a blend of the listed polymers.

7. The packaging laminate (12; 112) according to one of the preceding claims, **characterized in that** the first polymer layer arrangement (16; 116) has an overall thickness in the range of 15 µm to 80 µm
or/and **in that** the second polymer layer arrangement (20; 120, 121, 123, 125) has an overall thickness in the range of 15 µm to 90 µm or/and **in that** the packaging laminate (12; 112) has an overall thickness in the range of 130 µm to 400 µm.

8. The packaging laminate (12; 112) according to one of the preceding claims, **characterized in that** the packaging laminate (12; 112) comprises at least one third polymer layer arrangement (30; 130, 131), wherein the at least one third polymer layer arrangement (30; 130, 131) comprises a polymer film (70; 170, 131), wherein the polymer of the polymer film (70; 170, 131) of the third polymer layer arrangement (30; 130, 131) comprises at least one polymer of polyethylene, polyethylene terephthalate, polypropylene, polyvinyl alcohol, ethylene vinyl alcohol copolymer, ethylene and acrylic acid, ethylene methyl acrylate, cyclic olefin copolymer, a maleic anhydride grafted polymer, a plastomer/elastomer, a ionomer, a peelable resin based on ethylene methyl acrylate, a biodegradable polymer, a compostable polymer, a blend of the listed polymers, wherein preferably at least one third polymer layer arrangement (30; 130) of the at least one third polymer layer arrangement (30; 130) additionally comprises a barrier material layer (72, 74; 172, 174), wherein the barrier material layer (72, 74; 172, 174) comprises at least one of a vinyl alcohol polymer layer (74; 174), a metal oxide layer (72; 172), and a polymer layer filled with nanoparticles.

9. The packaging laminate (12; 112) according to claim 8,
**characterized in that** the at least one third polymer layer arrangement (30; 130, 131) has an overall thickness in the range of 40 µm to 200 µm.

10. The packaging laminate (12; 112) according to one of the preceding claims, **characterized in that** the packaging laminate (12; 112) comprises two first polymer layer arrangements which are bonded to each other by the second polymer layer arrangement.

11. The packaging laminate (12; 112) according to one of the preceding claims, including at least one of claims 8 and 9,
**characterized in that** the packaging laminate comprises a first polymer layer arrangement (16; 116) and a third polymer layer arrangement (30; 130), which are bonded to each other by the second polymer layer arrangement (20; 120).

12. The packaging laminate (12; 112) according to claim 11,
**characterized in that** the third polymer layer arrangement (30; 130, 131) is located closer to the outside of the packaging laminate (12; 112), and the first polymer layer arrangement (16; 116) is located closer to the inside of the packaging laminate (12; 112).

13. The packaging laminate (112) according to one of the preceding claims, including at least one of claims 8 and 9,
**characterized in that** the packaging laminate (112) comprises two third polymer layer arrangements (130, 131), which are bonded to each other by a second polymer layer arrangement (121).

14. A tube body (92) for a tube container (90) as a packaging comprising the packaging laminate (12; 112) according to one of the preceding claims, the tube body (92) extending along a tube axis (TLA) and having a longitudinal seam (100) extending along the tube axis (TLA), wherein opposite ends of a blank containing the packaging laminate are connected to form a tubular body, and wherein the tube body (92) has a cross seam (102) at one of its longitudinal end portions (92a), closing the tubular body at the longitudinal end (92a), wherein the cross seam (102) extends in a crosswise direction relative to the tube axis (TLA).

15. A tube container (90) comprising the tube body of claim 14 and a tube head (94) bonded to an open longitudinal end (92b) of the tube body (92), wherein the open longitudinal end is located opposite to the closed longitudinal end (92a) having the cross seam (102), wherein the tube head (94) has an opening (97) by which a surrounding environment of the tube container (90) is accessible from the container space (99) of the tube container (90).
